Europäisches Patentamt

(19) European Patent Office

Office européen des brevets

(11) Numéro de publication : **0 019 533**
**B1**

(12) **FASCICULE DE BREVET EUROPÉEN**

(45) Date de publication du fascicule du brevet :
25.07.84

(51) Int. Cl.³ : **F 16 F 1/40**, B 61 G 11/08,
F 16 F 1/44

(21) Numéro de dépôt : **80400641.9**

(22) Date de dépôt : **09.05.80**

(54) **Amortisseurs de chocs.**

(30) Priorité : **11.05.79 FR 7912115**

(43) Date de publication de la demande :
**26.11.80 Bulletin 80/24**

(45) Mention de la délivrance du brevet :
**25.07.84 Bulletin 84/30**

(84) Etats contractants désignés :
**AT BE CH DE GB IT LI LU NL SE**

(56) Documents cités :
**FR-A- 875 113**
**FR-A- 1 281 685**
**FR-A- 1 588 573**
**FR-A- 2 069 487**
**GB-A- 9 257**
**US-A- 1 941 995**
**US-A- 2 575 491**

(73) Titulaire : **HUTCHINSON-MAPA**
**2, rue Balzac**
**F-75008 Paris (FR)**

(72) Inventeur : **Domer, Michel**
**41, rue Serge Launey**
**F-95370 Montigny Les Cormeilles (FR)**

(74) Mandataire : **Behaghel, Pierre**
**CABINET PLASSERAUD 84 rue d'Amsterdam**
**F-75009 Paris (FR)**

## Description

L'invention est relative aux amortisseurs de chocs tels que, par exemple, les tampons ferroviaires montés sur les butoirs fixes ou sur les wagons, voitures ou motrices de chemin de fer, les tampons disposés verticalement au fond des cages d'ascenseurs, ou encore certaines butées portuaires.

Elle vise plus particulièrement, parmi ces amortisseurs, ceux comportant deux piles, s'entourant mutuellement d'éléments métalliques et d'éléments élastiques alternés propres à porter les uns contre les autres, avec compression des éléments élastiques, lors de la réception des chocs.

De tels amortisseurs ont été décrits dans le brevet GB 9257 AD 1915.

L'invention a pour but :

— d'une part, de conférer à ces amortisseurs à la fois de meilleures qualités de nervosité et de souplesse pour l'amortissement des chocs peu intenses et une plus grande capacité d'emmagasinage d'énergie pour l'amortissement des chocs intenses,

— et d'autre part de simplifier la fabrication et le montage desdits amortisseurs.

A cet effet, les amortisseurs du genre en question selon l'invention sont essentiellement caractérisés en ce que les éléments élastiques de chaque pile sont portés par les éléments métalliques de l'autre pile, en ce que les éléments élastiques des deux piles sont constitués respectivement en des élastomères présentant des caractéristiques de déformation et d'amortissement différentes, en ce que les différentes galettes constituées par un élément métallique de l'une quelconque donnée des deux piles et par l'élément élastique de l'autre pile porté par cet élément métallique sont identiques entre elles, à l'exclusion des galettes correspondant aux extrémités de l'amortisseur, et en ce qu'une légère précontrainte axiale est exercée sur les éléments élastiques dont le taux d'amortissement est le moins élevé.

Dans des modes de réalisation spéciaux, on a recours en outre à l'une et/ou à l'autre des dispositions suivantes :

— les éléments élastiques de l'une des piles présentent un taux d'amortissement inférieur à 10 % et ceux de l'autre pile, un taux d'amortissement supérieur à 10 %,

— certains des éléments élastiques sont conçus de façon à travailler au flambage lorsqu'ils sont comprimés axialement.

Dans ce qui suit, l'on va décrire un mode de réalisation préféré de l'invention en se référant au dessin ci-annexé d'une manière bien entendu non limitative.

La figure 1 de ce dessin, montre en coupe axiale un tampon amortisseur ferroviaire établi selon l'invention.

La figure 2 est un graphique explicatif.

La figure 3 montre, également en coupe axiale, une variante possible, conforme à l'invention, pour certains des anneaux constitutifs dudit tampon.

Le tampon considéré comprend une première pile d'anneaux 1 montés sur des disques métalliques 2 parallèles et juxtaposés axialement les uns contre les autres avec interposition de rondelles métalliques 3, les disques et rondelles étant montés coulissants sur une tige centrale 4.

Cette tige présente à l'une de ses extrémités une tête 5 et son autre extrémité est filetée et reçoit un écrou 6 dont le vissage a pour effet d'assurer la juxtaposition axiale des différents éléments 1 et 3 constitutifs de la pile, éventuellement avec une légère précontrainte.

On fait comprendre en outre audit tampon une seconde pile d'anneaux 7 entourant la première et montés sur les zones périphériques des rondelles 3.

Chacun des disques 2 est lui-même prolongé radialement à l'extérieur de l'anneau 1 qu'il porte par une couronne périphérique 8 interposée axialement entre deux anneaux 7 successifs.

Les anneaux 1 de la première pile sont constitués en un matériau élastomère élastiquement très déformable et présentant un faible taux d'amortissement T au sens défini ci-après, ce taux T étant de préférence inférieur à 10 % : un tel matériau est par exemple le caoutchouc naturel.

Par taux d'amortissement T d'un matériau élastomère, on entend ici le rapport entre d'une part l'énergie absorbée par un bloc de ce matériau lorsque celui-ci est successivement comprimé jusqu'au voisinage de son écrasement maximum, puis libéré de façon à reprendre sa forme initiale, et d'autre part l'énergie emmagasinée dans ledit bloc au cours de ce cycle de compression-détente.

Ce taux T peut être déduit de la courbe d'hystérésis représentant la déformation considérée.

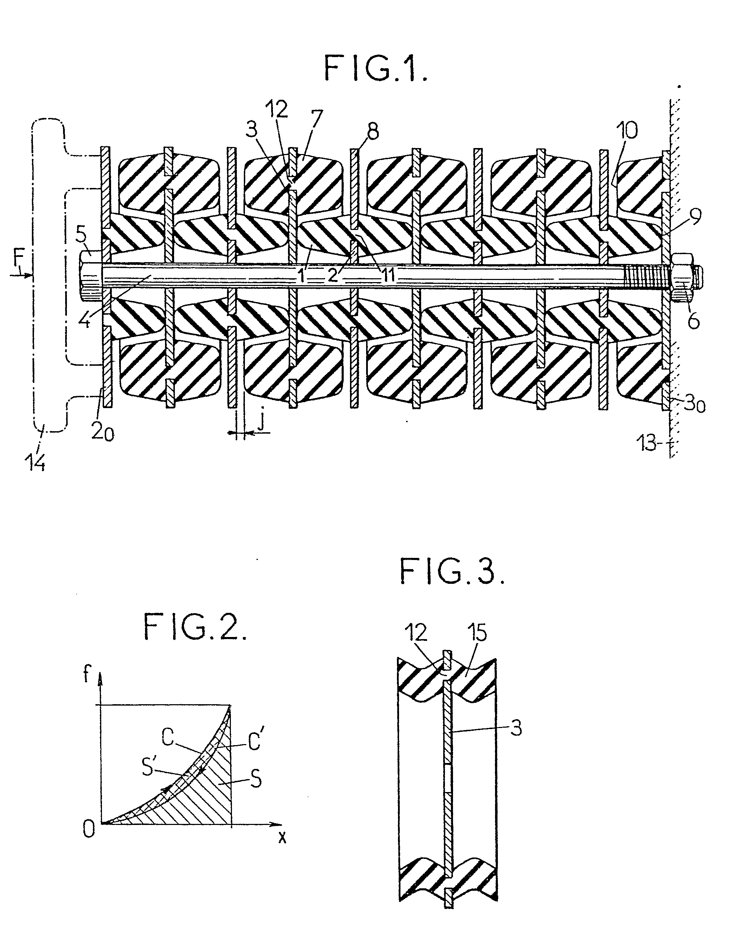

On voit sur la figure 2 une telle courbe, pour laquelle les abscisses désignent les déformations X et les ordonnées, les efforts f auxquels ces déformations correspondent : le segment C correspond à la compression du bloc de matériau élastomère considéré et le segment C', à sa dilatation subséquente.

Si l'on appelle S la surface totale comprise entre le segment C et l'axe des abscisses et S' la surface, ici en forme de croissant, comprise entre les deux segments C et C', le taux d'amortissement T ci-dessus est égal au rapport entre les surfaces S' et S.

Les zones de contact 9 entre les anneaux 1 et les rondelles 3 juxtaposées axialement contre elles sont étroites et bombées de façon telle que l'absorption des chocs par l'amortisseur considéré commence par déformer ces zones d'une manière progressive en les élargissant.

Ce type de déformation élastique progressive confère à l'amortisseur une grande souplesse et une excellente nervosité pour les chocs peu intenses.

Les anneaux 7 de la seconde pile sont constitués en un matériau moins déformable que le précédent, mais présentant un taux d'amortissement T plus élevé, de préférence supérieur à 10 %, ce qui lui permet d'emmagasiner de grandes énergies lors de l'absorption des chocs intenses : un tel matériau est par exemple un caoutchouc butyle.

Dans le mode de réalisation illustré, il existe au repos de l'amortisseur un intervalle axial j entre chaque anneau 7 et chacune des couronnes 8 en regard.

Par suite, ces anneaux 7 ne travaillent pas pour les chocs peu intenses : ils entrent en action uniquement lorsque l'écrasement axial des anneaux 1 a été suffisant pour annuler la totalité des jeux j ; mais à partir de cet instant, tous les anneaux 7 entrent à leur tour immédiatement en action.

Les surfaces annulaires d'attaque 10 de ces anneaux, c'est-à-dire propres à venir en contact avec les couronnes intermédiaires 8 dès suppression des jeux j, sont avantageusement planes, comme illustré, de sorte que toute la masse de ces anneaux est sollicitée à travailler en compression axiale dès le début de leur sollicitation.

Le montage des différents anneaux 1 et 7 sur leurs disques porteurs respectifs 2 et 3 est avantageusement effectué en formant directement ces anneaux par moulage et vulcanisation sur ces disques.

Ce formage est assuré de façon telle que lesdits anneaux s'étendent axialement de part et d'autre de leurs disques porteurs, la liaison entre les deux portions d'anneaux formées respectivement sur les deux faces d'un même disque étant assurée à travers des trous 11, 12 répartis circulairement sur chaque disque.

Dans le mode de réalisation préféré illustré, le plan moyen du disque porteur de chaque anneau constitue un plan de symétrie pour cet anneau et les trous 11, 12 permettant de réunir en un seul bloc les deux moitiés dudit anneau sont disposés au milieu de l'épaisseur radiale de celui-ci au niveau du disque.

De plus, l'épaisseur radiale de chaque anneau décroît progressivement au fur et à mesure que l'on s'éloigne de son disque porteur.

Les éléments métalliques désignés ci-dessus respectivement par les références 2, 8 (« disques prolongés extérieurement par des couronnes ») et 3 (« rondelles ») sont de préférence constitués par des plaques identiques, mais percées par des trous plus proches de l'axe dans le premier cas (trous 11) que dans le deuxième (trous 12).

En définitive, on peut considérer l'amortisseur comme composé d'un empilage alterné de galettes de deux types, savoir de disques identiques garnis alternativement :

— les premiers 2, d'un anneau 1 relativement déformable, présentant un petit diamètre moyen, une dimension radiale relativement faible et une dimension axiale relativement importante,

— et les seconds 3, d'un anneau 7 à fort amortissement, présentant un diamètre moyen supérieur au précédent, une dimension radiale plus importante que la précédente et une dimension axiale plus faible que la précédente.

Le fait que chacun des deux types d'élastomères considérés concerne exclusivement l'un des deux types de galettes permet une fabrication très simple de l'amortisseur à l'aide de deux moules différents ; ces deux moules permettent en effet de mouler les anneaux élastomères 1, 7 de deux types différents (par leurs formes et leurs propriétés) sur des disques identiques, mais perforés différemment, et ce en mettant en œuvre des procédés de moulage pouvant faire intervenir des températures, pressions... différentes.

Le montage de l'amortisseur est ensuite très facile à obtenir par empilage alternatif des galettes des deux types ainsi obtenues séparément.

Aux extrémités de la pile, on prévoit avantageusement des disques sur lesquels ne font saillie axialement que des demi-anneaux, en direction des autres anneaux de la structure, ces demi-anneaux pouvant être de l'un quelconque des deux types décrits ci-dessus : de la sorte la structure est terminée axialement par deux disques rigides.

L'un de ces disques d'extrémité, désigné par la référence $3_0$ à l'extrémité droite de l'amortisseur illustré sur la figure 1, peut être épaulé contre un bâti 13 propre à absorber le choc à amortir alors que le disque $2_0$ disposé à l'extrémité axiale opposée de ladite structure est recouvert par un chapeau creux 14 destiné à recevoir ledit choc, la tête 5 de la tige 4 étant notamment supposée liée à ce disque $2_0$ alors que l'extrémité filetée de la tige garnie de l'écrou 6 peut se déplacer librement à l'intérieur du bâti 13.

Le fonctionnement d'un amortisseur du type décrit ci-dessus est le suivant.

L'application d'un choc, schématisé par la flèche F, sur le chapeau 14, se traduit :

— d'abord pour une déformation souple, élastique et relativement « nerveuse » des sommets annulaires des anneaux 1 jusqu'à suppression des jeux j,

— puis par un écrasement axial progressif des anneaux 7 s'ajoutant à la poursuite de la déformation des anneaux 1, si le choc considéré est suffisamment intense.

Après encaissement de ce choc par l'ensemble de l'amortisseur, la détente élastique des différents anneaux ramène l'ensemble en sa position initiale en restituant en sens inverse l'énergie emmagasinée au mobile ayant provoqué le choc.

Ensuite de quoi, et quel que soit le mode de réalisation adopté, on dispose finalement d'un amortisseur dont la constitution, le fonctionnement et les avantages (en particulier l'excellente nervosité pour l'amortissement des chocs peu intenses, la forte capacité d'absorption d'énergie pour les chocs plus intenses, la simplicité de la fabrication et du montage) résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, les variantes suivantes :

— celles où les anneaux 1 de la pile centrale seraient remplacés par des blocs élastiques non ajourés centralement, les différents disques 2 et 3 pouvant alors, eux aussi, ne pas être ajourés centralement,

— celles où les contours des éléments élastiques et métalliques seraient autres que circulaires, par exemple rectangulaires,

— celles où le guidage mutuel des diverses galettes superposées serait assuré par des moyens autres qu'une tige centrale, par exemple à l'aide d'un fourreau rigide extérieur, lui-même éventuellement réduit à quelques barreaux parallèles,

— celles où certains des anneaux 1 et 7 ci-dessus présenteraient une forme différente de celle décrite à propos de la figure 1, cette forme pouvant par exemple être axialement dissymétrique par rapport à l'élément métallique porteur correspondant ou même affecter celle d'un tronçon tubulaire propre à travailler au flambage comme il a été illustré en 15 sur la figure 3, l'anneau élastique de cette figure ayant été supposé monté sur la périphérie d'un disque 3 percé de trous 12 du type décrit précédemment,

— celles où l'une au moins des surfaces frontales annulaires 10, des anneaux 7, propres à venir en contact avec les couronnes 8 en regard, ne serait pas plate, mais légèrement ondulée périphériquement de manière que l'attaque de la compression de cet anneau soit rendue plus progressive et que la courbe représentative de la déflexion de l'amortisseur en fonction de l'effort axial appliqué contre lui soit ainsi rendue plus continue,

— celles où le nombre des piles d'éléments élastiques concentriques à taux d'amortissement différents serait supérieur à deux.

**Revendications**

` 1. Amortisseur de chocs comportant deux piles, s'entourant mutuellement, d'éléments métalliques et d'éléments élastiques alternés propres à porter les uns contre les autres, avec compression des éléments élastiques, lors de la réception des chocs, caractérisé en ce que les éléments élastiques (1, 7) de chaque pile sont portés par les éléments métalliques (8, 3) de l'autre pile, en ce que les éléments élastiques de deux piles sont constitués respectivement en des élastomères présentant des caractéristiques de déformation et d'amortissement différentes, en ce que les différentes galettes constituées par un élément métallique (8 ou 3) de l'une quelconque donnée des deux piles et par l'élément élastique (1, 7) de l'autre pile porté par cet élément métallique sont identiques entre elles, à l'exclusion des galettes correspondant aux extrémités de l'amortisseur, et en ce qu'une légère précontrainte axiale est exercée sur les éléments élastiques (1) dont le taux d'amortissement est le moins élevé.

2. Amortisseur de chocs selon la revendication 1, caractérisé en ce que les éléments élastiques (1) de l'une des piles présentent un taux d'amortissement inférieur à 10 % et ceux (7) de l'autre pile, un taux d'amortissement supérieur à 10 %.

3. Amortisseur de chocs selon l'une quelconque des revendications précédentes, caractérisé en ce que certains éléments élastiques (13) sont conçus de façon à travailler au flambage lorsqu'ils sont comprimés axialement.

**Claims**

1. Shock absorber comprising two concentric stacks of alternating metallic elements and elastic elements arranged to bear one against the other, with compression of the elastic elements, upon reception of the shocks, characterized in that the elastic elements (1, 7) of each stack are borne by the metallic elements (8, 3) of the other stack, in that the elastic elements of the two stacks are constituted respectively of elastomers having different deformation and damping characteristics, in that the different pads constituted by a metallic element (8 or 3) of anyone of the two stacks and by the elastic element (1, 7), of the other stack, which is borne by said metallic element are identical, with the exception of the pads corresponding to the absorber ends, and in that a slight axial pre-stress is exerted on the elastic elements (1) with the lowest damping ratio.

2. Shock absorber according to claim 1, characterized in that the elastic elements (1) of one of the stacks have a damping ratio less than 10 % and those (7) of the other stack, a damping ratio greater than 10 %.

3. Shock absorber according to anyone of the preceding claims, characterized in that certain elastic elements (15) are designed to work on buckling when they are axially compressed.

**Ansprüche**

1. Stoßdämpfer mit zwei einander umgebenden Stapeln aus miteinander abwechselnden metallischen und elastischen Elementen, die unter Zusammendrücken der elastischen Elemente bei der Aufnahme von Stößen aneinander abstützbar sind, dadurch gekennzeichnet, daß die elastischen Elemente (1, 7) jedes Stapels von den metallischen Elementen (8, 3) des jeweils anderen Stapels getragen sind, daß die elastischen Elemente der beiden Stapel jeweils aus Elastomeren mit unterschiedlichen Verformungs- und Stoßdämpfungseigenschaften gebildet sind, daß die einzelnen Scheiben, die jeweils durch ein metallisches Element (8 oder 3) des einen Stapels und durch das von diesem metallischen Element getragene elastische Element (1, 7) des anderen Stapels gebildet sind, untereinander ident sind, mit Ausnahme der Scheiben an den Enden des Stoßdämpfers, und daß eine leichte axiale Vorspannung auf die elastischen Elemente (1) ausgeübt wird, deren Stoßdämpfungsgrad am kleinsten ist.

2. Stoßdämpfer nach Anspruch 1, dadurch gekennzeichnet, daß die elastischen Elemente (1) des einen Stapels einen Stoßdämpfungsgrad von unter 10 % aufweisen und jene (7) des anderen Stapels einen Stoßdämpfungsgrad von über 10 %.

3. Stoßdämpfer nach Anspruch 1 oder 2, dadurch gekennzeichnet, daß bestimmte elastische Elemente (13) so ausgebildet sind, daß sie knicken, wenn sie axial zusammengedrückt werden.

# FIG.1.

# FIG.3.

# FIG.2.